# EUROPEAN PATENT APPLICATION

(11) **EP 4 310 575 A1**
(43) Date of publication of application: **24.01.2024**
(21) Application number: 21932801.0
(22) Date of filing: 31.12.2021
(51) Int. Cl.: G02B 27/01

(54) **OPTICAL SYSTEM AND WEARABLE AUGMENTED REALITY DISPLAY DEVICE**

(30) Priority: 24.03.2021 CN 202110315309
(71) Applicant: GUANGDONG OPPO MOBILE TELECOMMUNICATIONS CORP., LTD., Dongguan, Guangdong 523860 (CN)
(72) Inventor: GAO, Zhenyu, Dongguan, Guangdong 523860 (CN); YIN, Jianliang, Dongguan, Guangdong 523860 (CN); ZHENG, Guang, Dongguan, Guangdong 523860 (CN)
(74) Representative: Taor, Simon Edward William
(86) International application number: PCT/CN2021/143504
(87) International publication number: WO 2022/199194

(57) **Abstract**

Provided are an optical system and a wearable augmented reality display device. The optical system includes: an image projection assembly (1) configured to emit image light; a first optical assembly (2) configured to reflect and transmit the image light emitted by the image projection assembly (1); a second optical assembly (3) configured to reflect the image light reflected from the first optical assembly (2) and transmit light from a real scene; and a stray light suppression member (4) disposed between the image projection assembly (1) and the first optical assembly (2) and adjacent to a position above an effective reflection surface of the second optical assembly (3), the stray light suppression member (4) being configured to block light reflected from the first optical assembly (2) to a central region above the reflection surface of the second optical assembly (3), and/or to block light directly transmitted from the image projection assembly (1) to two side regions above the reflection surface of the second optical assembly (3), to reduce stray light at an upper side and a lower side outside the field of view, bringing about a better sensory experience to a user.

## Description

The application claims a priority to Chinese Patent Application No. 202110315309.X, entitled "OPTICAL SYSTEM AND WEARABLE AUGMENTED REALITY DISPLAY DEVICE", and filed with China National Intellectual Property Administration on March 24, 2021, the entire content of which is incorporated herein by reference.

### FIELD

The present disclosure relates to the field of Augmented Reality (AR) technologies, and more particularly, to an optical system and a wearable augmented reality display device

### BACKGROUND

The principle of AR glasses is to superimpose a computer-generated image on a real vision of a user, enabling a virtual image to be seamlessly integrated with a real image. In this way, a digital image of a virtual world and a physical object of a real world are combined to bring the user a sensory experience beyond reality. However, stray light in a pair of AR glasses is directed at human eyes, which will affect a visual experience of the user.

### SUMMARY

Embodiments of the present disclosure provide an optical system and a wearable augmented reality device. The optical system can suppress stray light outside a field of view, bringing about a better sensory experience to a user.

The embodiments of the present disclosure provide an optical system. The optical system includes: an image projection assembly configured to emit image light; a first optical assembly configured to reflect and transmit the image light emitted by the image projection assembly; a second optical assembly configured to reflect the image light reflected from the first optical assembly and transmit light from a real scene; and a stray light suppression member disposed between the image projection assembly and the first optical assembly and adjacent to a position above an effective reflection surface of the second optical assembly. The stray light suppression member is configured to block light reflected from the first optical assembly to a central region above the reflection surface of the second optical assembly, and/or to block light directly transmitted from the image projection assembly to two side regions above the reflection surface of the second optical assembly, to reduce stray light outside a field of view.

The embodiments of the present disclosure further provide a wearable augmented reality display device. The wearable augmented reality display device includes the optical system according to any of the above embodiments and a clamp member. The clamp member is connected to the optical system.

### BRIEF DESCRIPTION OF THE DRAWINGS

In order to clearly explain technical solutions according to embodiments of the present disclosure, drawings used in the description of the embodiments are briefly described below. Obviously, the drawings as described below are merely some embodiments of the present disclosure. Based on these drawings, other drawings can be obtained by those skilled in the art without inventive effort.

For a more complete understanding of the present disclosure and its advantageous effects, the following description will be made in conjunction with the accompanying drawings, throughout which same elements are denoted by same reference numerals.
FIG. 1 is a schematic diagram of a field of view and regions outside the field of view according to an embodiment of the present disclosure.
FIG. 2 is a side schematic diagram of a structure of an optical system according to an embodiment of the present disclosure.
FIG. 3 is a side schematic diagram of a first structure of a stray light suppression member in FIG. 2.
FIG. 4 is an optical path diagram of stray light in a first region in a case of a schematic diagram of a first structure illustrated in FIG. 2.
FIG. 5 is an optical path diagram of stray light in a second region in a case of a schematic diagram of a first structure illustrated in FIG. 2.
FIG. 6 is a side schematic diagram of a second structure of a stray light suppression member in FIG. 2.
FIG. 7 is a schematic diagram of a first three-dimensional structure of an optical system according to an embodiment of the present disclosure.
FIG. 8 is a schematic diagram of a second three-dimensional structure of an optical system according to an embodiment of the present disclosure.
FIG. 9 is a schematic structural diagram of a wearable augmented reality display device according to an embodiment of the present disclosure.

### DETAILED DESCRIPTION

Technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without inventive labor shall fall within the protection scope of the present disclosure.

Reference to "embodiment" or "implementation" herein means that a particular feature, structure, or characteristic described in conjunction with the embodiment or implementation may be included in at least one embodiment of the present disclosure. The presence of the term at each place in the specification does not necessarily refer to the same embodiment, nor does it refer to a separate or alternative embodiment that is mutually exclusive of other embodiments. It should be understood by those skilled in the art, both explicitly and implicitly, that the embodiments described herein may be combined with other embodiments.

With the continuous improvement of technology and the gradual increase in demand, the field of augmented reality head-mounted devices is currently gaining more and more attention, and accordingly numerous optical solutions are emerging. The principle of AR glasses is to superimpose a computer-generated image on a real vision of a user, enabling a virtual image to be seamlessly integrated with a real image. In this way, a digital image of a virtual world and a physical object of a real world are combined to bring the user a sensory experience beyond reality.

Currently, for a head-mounted augmented reality display device such as a pair of AR glasses, a pair of AR glasses having a large field of view can bring a better sensory experience. The field of view represents a maximum observable range for human eyes, which is usually expressed in terms of degrees. An observation range increases as the field of view increases. However, a relatively large field of view also brings a problem of a degraded imaging quality. That is, stray light will appear around the field of view, especially stray light at an upper side outside the field of view and at a lower side outside the field of view. Here, for the sake of illustration, a side facing away from the nose outside the field of view of the human eye is referred to as the upper side outside the field of view, and thus a side opposite to the upper side outside the field of view is referred to as the lower side outside the field of view. That is, a side facing away from the forehead outside the field of view of the human eye is referred to as the lower side outside the field of view. The same principle applies to an upper side and a lower side of a second optical assembly 3. The upper side of the second optical assembly 3 refers to an end of the second optical assembly 3 facing away from the nose. The lower side of the second optical assembly 3 refers to an end of the second optical assembly 3 facing away from the forehead.

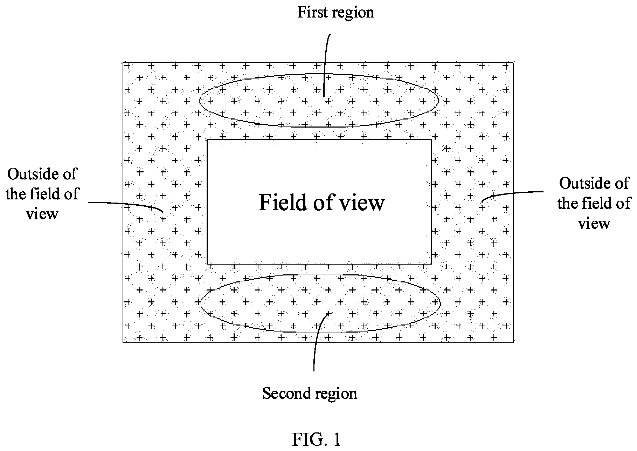

FIG. 1 is a schematic diagram of a field of view and regions outside the field of view according to an embodiment of the present disclosure. As illustrated in FIG. 1, an unfilled portion in the middle of the figure represents the field of view, and a filled portion around the unfilled portion represents an outside of the field of view. The upper side outside the field of view is defined as a first region, while the lower side outside the field of view is defined as a second region. In FIG. 1, the first region and the second region each are circled with an ellipse. However, the ellipses are drawn to facilitate pointing out positions of the first region and the second region, and are neither drawn to define nor to limit sizes of the first region and the second region. It should be understood that, a region at the upper side outside the field of view is the first region, and a region at the lower side outside the field of view is the second region. Since definitions of the "upper side outside the field of view" and the "lower side outside the field of view" have been explained in detail above, details thereof will be omitted here. Light outside the field of view does not participate in effective imaging, but affects the human eye, which produces visual interference, affecting an overall visual experience. Therefore, this part of light that does not participate in the effective imaging is known as the stray light or parasitic light.

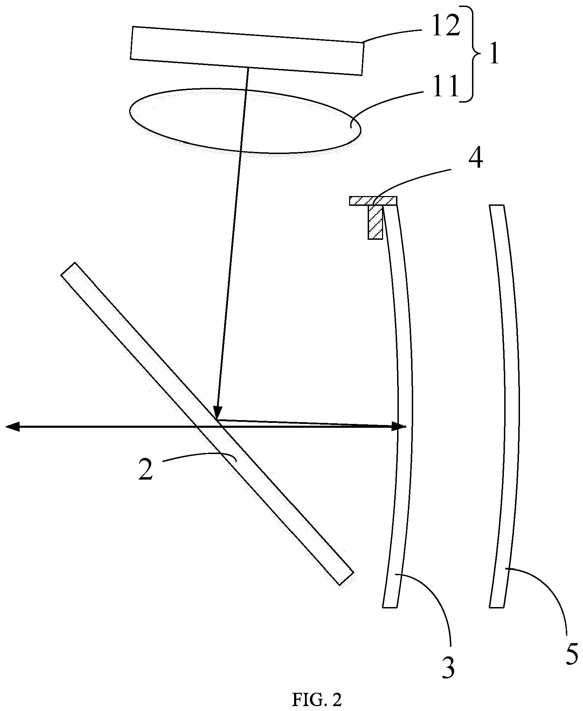

FIG. 2 is a side schematic diagram of an optical system according to an embodiment of the present disclosure. As illustrated in FIG. 2, a solid line with an arrow is a path of effective light. The embodiments of the present disclosure provide an optical system. The optical system may include an image projection assembly 1, a first optical assembly 2, a second optical assembly 3, and a stray light suppression member 4. The image projection assembly 1 may be configured to emit image light which then enters the first optical assembly 2 and/or the second optical assembly 3. The first optical assembly 2 is configured to reflect and transmit the image light emitted by the image projection assembly 1. The second optical assembly 3 is configured to reflect the image light reflected from the first optical assembly 2 and transmit light from a real scene. The stray light suppression member 4 is disposed between the image projection assembly 1 and the first optical assembly 2 and adjacent to a position above an effective reflection surface of the second optical assembly 3. The stray light suppression member 4 is configured to block light reflected from the first optical assembly 2 to a central region above the reflection surface of the second optical assembly 3, and/or to block light directly transmitted from the image projection assembly 1 to two side regions above the reflection surface of the second optical assembly 3, to reduce stray light outside the field of view, specifically to reduce stray light in the first region and the second region outside the field of view, bringing about a better sensory experience to a user.

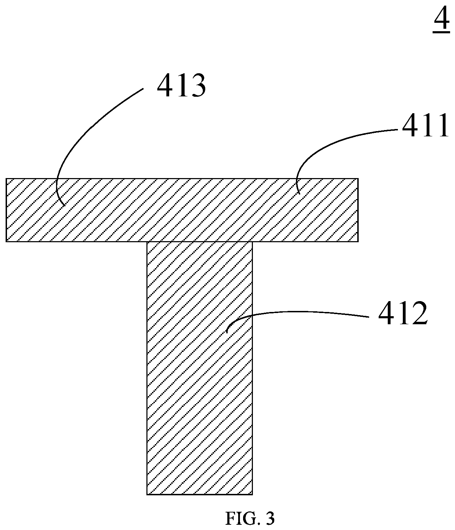

FIG. 3 is a schematic diagram of a first structure of a stray light suppression member in FIG. 2. As illustrated in FIG. 3, in an embodiment of the present disclosure, the stray light suppression member 4 may include a fixation portion 411, a first light-blocking portion 412, and a second light-blocking portion 413. An end of the first light-blocking portion 412 is connected to an end of the fixation portion 411. An end of the second light-blocking portion 413 is connected to an intersection between the fixation portion 411 and the first light-blocking portion 412. The first light-blocking portion 412 is formed by extending in a direction facing away from the image projection assembly 1. The second light-blocking portion 413 is formed by extending from the fixation portion 411 in a direction facing away from the second optical assembly 3. The fixation portion 411 is disposed on an upper end surface of the second optical assembly 3 to provide fixation. An included angle is formed between the first light-blocking portion 412 and the second light-blocking portion 413. Preferably, the included angle is a right angle. Of course, the included angle may be an obtuse angle. The angle between the first light-blocking portion 412 and the second light-blocking portion 413 is set in terms of an efficiency in blocking the stray light. A satisfaction of the set angle increases with an increase in an amount of the blocked stray light.

It should be understood that the stray light suppression member 4 is non-light-transmittable and is able to block light. The stray light suppression member 4 may be made of a light absorbing material. It should be understood that objects have different colors because they reflect different colors of light. An object that reflects no light is defined as a block object. Since black means that no light is reflected, it can be interpreted that all light is absorbed for black. In the embodiments of the present disclosure, the stray light suppression member 4 may be made of a black light absorbing material, in such a manner that the stray light suppression member 4 can have a better effect of reducing the stray light outside the field of view.

It should be noted that terms such as "first" and "second" in the specification, claims, and accompanying drawings of the present disclosure are used to distinguish different objects, rather than to describe a specific sequence. In addition, terms "including" and "having" and any variations thereof are intended to cover non-exclusive inclusions.

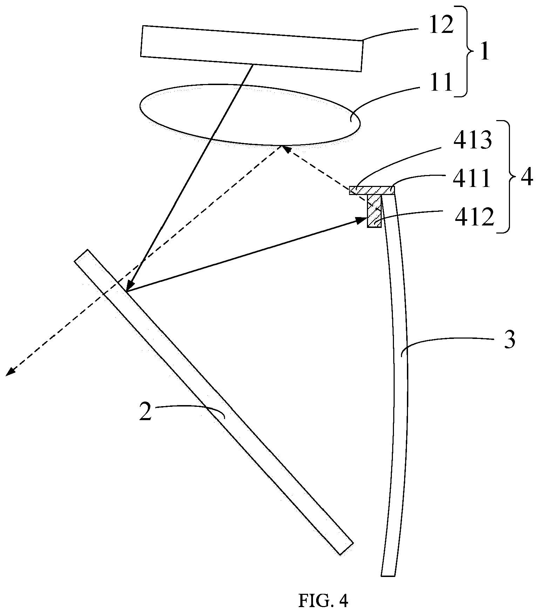

FIG. 4 is an optical path diagram of stray light in a first region in a case of a schematic diagram of a first structure illustrated in FIG. 2. As illustrated in FIG. 4, an optical path formed by solid and dashed lines together is a path diagram of the stray light when no stray light suppression member 4 is provided. The solid lines illustrate a path diagram of the stray light when the stray light is blocked by the stray light suppression member 4. The first light-blocking portion 412 is configured to block stray light reflected from the first optical assembly 2 to the central region above the reflection surface of the second optical assembly 3, to reduce stray light in a first region. In some embodiments, in the absence of the stray light suppression member 4, the image light emitted by the image projection assembly 1 is partially reflected subsequent to being incident on the first optical assembly 2. The reflected image light is partially incident on the central region of the second optical assembly 3, is reflected back to the image projection assembly 1, is reflected from the image projection assembly 1 to the first optical assembly 2, and then enters the human eye, forming the stray light in the first region.

When the stray light suppression member 4 is used, in a case where the first optical assembly 2 reflects the image light to the central region of the second optical assembly 3, this part of image light is blocked by the first light-blocking portion 412 of the stray light suppression member 4. That is, after the solid arrow in FIG. 4 directs towards the stray light suppression member 4, this part of image light is blocked by the first light-blocking portion 412, rather than being reflected back to the image projection assembly 1 as would be the case where no stray light suppression member 4 is provided, reducing the stray light in the first region.

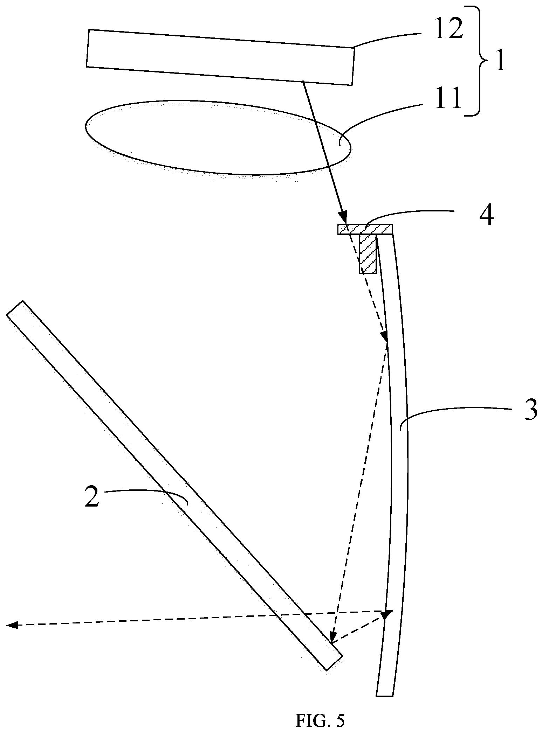

FIG. 5 is an optical path diagram of stray light in a second region in a case of a schematic diagram of a first structure illustrated in FIG. 2. As illustrated in FIG. 5, an optical path formed by solid and dashed lines together is a path diagram of the stray light when no stray light suppression member 4 is provided. The solid line illustrates a path diagram of the stray light when the stray light is blocked by the stray light suppression member 4. The second light-blocking portion 413 is configured to block the stray light directly transmitted from the image projection assembly 1 to the two side regions above the reflection surface of the second optical assembly 3, to reduce stray light in a second region. In some embodiments, in the absence of the stray light suppression member 4, the image light emitted by the image projection assembly 1 is partially directly incident on the two side regions above the reflection surface of the second optical assembly 3. This part of image light is reflected by the two side regions above the reflection surface of the second optical assembly 3 to two side regions of a lower part of the first optical assembly 2, is reflected back to two side regions of a lower part of the second optical assembly 3 by the first optical assembly 2, is reflected back to two side regions of the lower part of the first optical assembly 2 from the two side regions of the lower part of the second optical assembly 3, and then enters the human eye, forming stray light in two side regions in the second region.

When the stray light suppression member 4 is used, in a case where the image light emitted by the image projection assembly 1 is about to be partially incident on the two side regions above the reflection surface of the second optical assembly 3, this part of image light is blocked by the second light-blocking portion 413 of the stray light suppression member 4. That is, after the solid arrow in FIG. 5 directs towards the stray light suppression member 4, this part of image light is blocked by the second light-blocking portion 413, rather than being incident on the second optical assembly 3 as would be the case where no stray light suppression member 4 is provided, reducing the stray light in the two side regions in the second region.

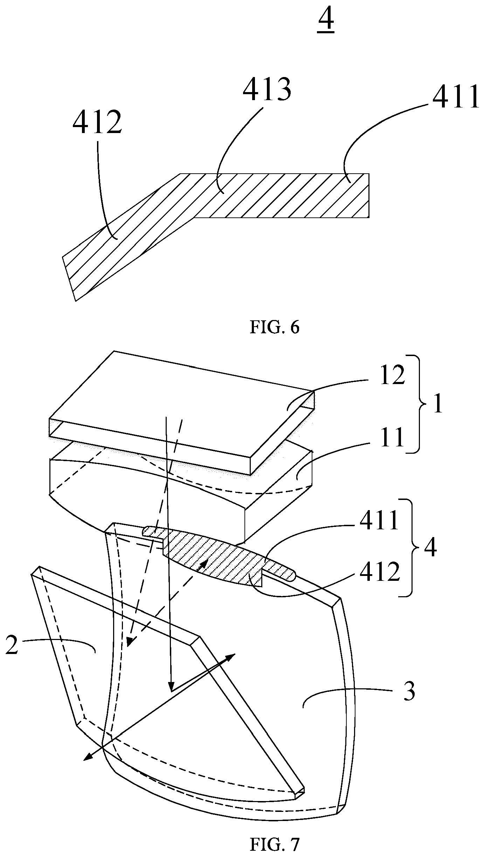

FIG. 6 is a schematic diagram of a second structure of a stray light suppression member in FIG. 2. As illustrated in FIG. 6, in an optional embodiment of the present disclosure, the stray light suppression member 4 may include the fixation portion 411, the first light-blocking portion 412, and the second light-blocking portion 413. An end of the second light-blocking portion 413 is connected to an end of the fixation portion 411. The second light-blocking portion 413 is formed by extending in a direction facing away from the second optical assembly 3. An end of the first light-blocking portion 412 is connected to another end of the second light-blocking portion 413. The first light-blocking portion 412 is formed by extending in a direction facing away from the image projection assembly 1. The fixation portion 411 is disposed on an upper end surface of the second optical assembly 3 to provide fixation. An included angle is formed between the first light-blocking portion 412 and the second light-blocking portion 413. Preferably, the included angle is an obtuse angle smaller than 180 degrees. Of course, the included angle may be a right angle. The angle between the first light-blocking portion 412 and the second light-blocking portion 413 is set in terms of an efficiency in blocking the stray light. A satisfaction of the set angle increases with an increase in an amount of the blocked stray light.

It should be understood that the principle of the stray light suppression member 4 of the second structure is the same as that of the stray light suppression member 4 of the above-mentioned first structure. The first light-blocking portion 412 is configured to block the stray light reflected from the first optical assembly 2 to the central region above the reflection surface of the second optical assembly 3, to reduce the stray light in the first region. The second light-blocking portion 413 is configured to block the stray light directly transmitted from the image projection assembly 1 to the two side regions above the reflection surface of the second optical assembly 3, to reduce the stray light in the second region.

FIG. 7 is a schematic diagram of a first three-dimensional structure of an optical system according to an embodiment of the present disclosure. As illustrated in FIG. 7, the dashed lines represent a stray light path and the solid lines represent an effective light path. In an optional embodiment of the present disclosure, the stray light suppression member 4 may include the fixation portion 411 and the first light-blocking portion 412. As illustrated in FIG. 7, an end of the first light-blocking portion 412 is connected to an end of the fixation portion 411. The first light-blocking portion 412 is formed by extending in a direction facing away from the image projection assembly 1. The fixation portion 411 is disposed on an upper end surface of the second optical assembly 3 to provide fixation. The first light-blocking portion 412 is configured to block the stray light reflected from the first optical assembly 2 to the central region above the reflection surface of the second optical assembly 3, to reduce the stray light in the first region. In some embodiments, the image light emitted by the image projection assembly 1 is partially reflected subsequent to being incident on the first optical assembly 2. When the first optical assembly 2 reflects the image light to the central region above the reflection surface of the second optical assembly 3, this part of image light is blocked by the first light-blocking portion 412 of the stray light suppression member 4. That is, after the dashed arrow in FIG. 6 directs towards the stray light suppression member 4, this part of image light is blocked by the first light-blocking portion 412, reducing the stray light in the first region.

A size of the first light-blocking portion 412 may be set based on a path of the stray light in the optical system. For example, the first light-blocking portion 412 may extend in the direction facing away from the image projection assembly 1 by a length of about 2 mm and be with a width of about 16 mm. The width here refers to a width of a surface of the first light-blocking portion 412 extending on the effective reflection surface of the second optical assembly 3. A surface enclosed by the length and the width of the light-blocking portion 412 is a surface of the first light-blocking portion 412 for blocking the stray light. The structure and size of the stray light suppression member 4 provided in the embodiments of the present disclosure are merely illustrative, and do not constitute limitations on the structure and size of the stray light suppression member 4 of the embodiments of the present disclosure. In practice, the structure of the stray light suppression member 4 may be the structure in FIG. 7, but the structure is not unique, nor is the size.

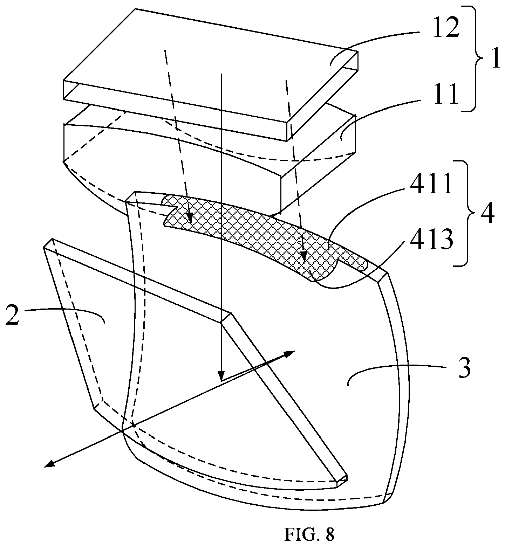

FIG. 8 is a schematic diagram of a second three-dimensional structure of an optical system according to an embodiment of the present disclosure. As illustrated in FIG. 8, the dashed lines represent a stray light path and the solid lines represent an effective light path. In an optional embodiment of the present disclosure, the stray light suppression member 4 may include the fixation portion 411 and the second light-blocking portion 413. As illustrated in FIG. 8, an end of the second light-blocking portion 413 is connected to an end of the fixation portion 412. The second light-blocking portion 413 is formed by extending in a direction facing away from the second optical assembly 3. The fixation portion 411 is disposed on an upper end surface of the second optical assembly 3 to provide fixation. The second light-blocking portion 413 is configured to block the stray light directly transmitted from the image projection assembly 1 to the two side regions above the reflection surface of the second optical assembly 3, to reduce the stray light in the second region. In some embodiments, when the image light emitted by the image projection assembly 1 is about to be partially incident on the two side regions above the reflection surface of the second optical assembly 3, this part of image light is blocked by the second light-blocking portion 413 of the stray light suppression member 4. That is, after the dashed arrow in FIG. 7 directs towards the stray light suppression member 4, this part of image light is blocked by the second light-blocking portion 413, reducing the stray light on the two side regions in the second region.

It should be understood that a size of the second light-blocking portion 413 may be set based on a path of the stray light in the optical system. For example, the second light-blocking portion 413 may extend in the direction facing away from the second optical assembly 3 by a length of about 1.6 mm and be with a width of about 26 mm. A surface enclosed by the length and the width of the second light-blocking portion 413 is a surface of the second light-blocking portion 413 for blocking the stray light. The structure and size of the stray light suppression member 4 provided in the embodiments of the present disclosure are merely illustrative, and do not constitute limitations on the structure and size of the stray light suppression member 4 of the embodiments of the present disclosure. In practice, the structure of the stray light suppression member 4 may be the structure in FIG. 8, but the structure is not unique, nor is the size.

It should be understood that the stray light suppression member 4 may be disposed directly on an upper end surface of the second optical assembly 3. That is, the stray light suppression member 4 may be directly supported on the upper end surface of the second optical assembly 3. Of course, the stray light suppression member 4 may further be fixed to another member in the optical system and spaced apart from the upper end surface of the second optical assembly 3.

In an optional embodiment of the present disclosure, the image projection assembly 1 is configured to emit the image light. The image projection assembly 1 may include an image source 11 and a lens 12. The image source 11 is disposed at a side facing away from the first optical assembly 2. The lens 12 is disposed between the image source 11 and the first optical assembly 2. Light emitted from the image source 11 passes through the lens 12 and then enters the first optical assembly 2 and/or the second optical assembly 3.

It should be understood that the image source 11 serves to display an image that needs to be projected to the human eye, and may be a micro-display. The image source 11 may be a planar image source, and includes, but is not limited to, an image source integrated with an light source or a single image source, e.g., an electronic device employing display principles such as an Organic Light-Emitting Diode (OLED), a Liquid Crystal On Silicon (LCOS), a Liquid Crystal Display (LCD), a Micro Electromechanical System (MEMS), and a Digital Micro-mirror Device (DMD). The OLED and the LCD are image sources integrated with the light source. The LCOS, the MEMS, and the DMD are single image sources. It should be noted that the single image source requires to be added with an additional light source that serves as an auxiliary light source for the single image source. It should be understood that the types of the image source 11 provided in the embodiments of the present disclosure are merely illustrative and do not constitute limitations on the types of the image source 11 of the embodiments of the present disclosure.

When a Micro-OLED or a Micro-LED, as the micro-display, is configured to emit an un-polarized light source, a polarization conversion element may be disposed between the micro-display and an imaging lens group. The polarization conversion element is configured to convert the un-polarized light into linearly polarized light or circularly polarized light with a particular direction that matches a subsequent optical path. When the micro-display is configured to emit polarized light, such as an LCD, a polarization direction needs to be determined, and polarization match needs to be performed in the subsequent optical path.

It should be understood that, the lens 12 is configured to modulate light emitted from the micro-display, provide a portion of focal power in an entire imaging optical path, and correct an aberration of the system. The lens 12 may be an imaging lens group. The imaging lens group may include at least one lens. The lens may be a plastic lens or a glass lens. A surface topography of the lens may be a spherical surface or an aspherical surface. Generally, an air gap exists between the imaging lens group and the micro-display. In special cases, a surface of the imaging lens group adjacent to the micro-display may be directly glued to a surface of the micro-display or glued to a surface of the subsequent provided polarizing film system of the micro-display.

The first optical assembly 2 is configured to realize reflection and transmission multiplexing of the optical path. In an optional embodiment of the present disclosure, the first optical assembly 2 may be a composite flat plate. The composite flat plate may include a variety of combination schemes. The composite flat plate may be a partially-transmissive and partially-reflective flat plate when the system uses un-polarized light. When the system uses polarized light, the composite flat plate may include a quarter-wave plate, a polarizing beam-splitting film 21, a polarizer 22, and a substrate 23. The substrate 23 is located adjacent to the human eye. The polarizer 22 is attached to an end of the substrate 23 facing away from the human eye. The polarizing beam-splitting film 21 is attached to an end of the polarizer 22 facing away from the human eye. The quarter-wave plate may be attached to an end of the polarizing beam-splitting film 21 facing away from the human eye; or the quarter-wave plate may be disposed between the first optical assembly 2 and the second optical assembly 3; or the quarter-wave plate may be affixed to the second optical assembly 3 and adjacent to a surface of the first optical assembly 2.

It should be understood that the substrate 23 may be a plastic substrate or a glass substrate. It should be understood that a material of the substrate 23 provided in the embodiments of the present disclosure is merely illustrative, and does not constitute a limitation on the material of the substrate 23 of the embodiments of the present disclosure.

The second optical assembly 3 is configured to reflect effective light of the virtual image on the one hand and to transmit the light from the real scene on the other hand. Preferably, the partial transmission and partial reflection is realized by means of coating, and both the transmission and the reflection present no polarization characteristic. That is, regardless of polarization characteristics of light, the transmission and the reflection can be carried out in accordance with a design ratio. In an optional embodiment of the present disclosure, a surface topography of the second optical assembly 3 may be spherical, aspherical, or free-form, etc. The material may be glass or plastic. It should be understood that the second optical assembly 3 is in direct contact with the stray light suppression member 4 and is mutually supported with a support surface of the stray light suppression member 4. When the quarter-wave plate is present independently from the first optical assembly 2, the quarter-wave plate may be affixed to a surface of the second optical assembly 3 adjacent to the first optical assembly 2.

The optical system provided in the embodiments of the present disclosure may further include a mask 5. Further referring to FIG. 2, the mask 5 is located at a side of the second optical assembly 3 facing away from the first optical assembly 2. The mask 5 mainly serves to protect the second optical assembly 3. Also, the mask 5 can suppress internal and external stray light and/or privacy-related light. The mask 5 may be composed of a quarter-wave plate, a polarizer, and a substrate. The substrate may be the plastic substrate or the glass substrate. Preferably, the substrate may be made of a plastic material. A surface topography of the substrate may be spherical, aspherical, or free-form, etc. It should be understood that the material and the surface topography of the substrate provided by the embodiments of the present disclosure are merely illustrative and do not constitute limitations on the material and the surface topography of the substrate of the embodiments of the present disclosure.

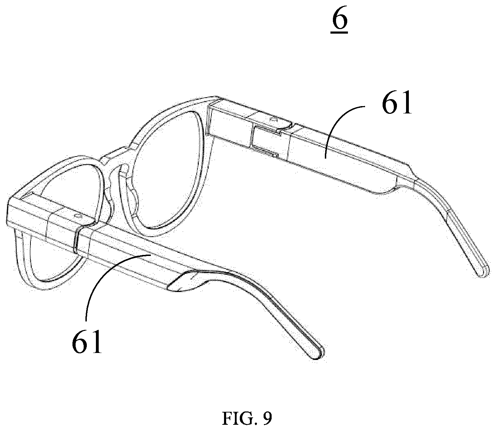

Embodiments of the present disclosure further provide a wearable augmented reality display device. FIG. 9 is a schematic structural diagram of a wearable augmented reality display device according to an embodiment of the present disclosure. As illustrated in FIG. 9, a wearable augmented reality display device 6 further includes a clamp member 61 and the optical system according to any of the above-mentioned embodiments. The clamp member 61 is connected to the optical system, and is configured to be fixed on a wearer for easy wearing.

The wearable augmented reality display device 6 may be, but is not limited to, a pair of AR glasses, an AR helmet, or an AR mask. As illustrated in FIG. 9, when the wearable augmented reality display device 6 is a pair of AR glasses, the clamp member 61 is a spectacle frame, and the optical system is mounted on the spectacle frame and is equivalent to be located at a position of the glass. When the wearable augmented reality display device 6 is an AR helmet, the clamp member may be a helmet housing, and the optical system is mounted on a face window portion of the helmet housing on a front side.

The optical system and the wearable augmented reality display device provided by the embodiments of the present disclosure are described in detail above. Specific examples are applied herein to illustrate principles and implementations of the present disclosure. Description of the above embodiments is only used to help understand the method and the core concepts of the present disclosure. In addition, for those skilled in the art, changes may be made to specific implementations and an application scope based on the concepts of the present disclosure. In summary, the contents of the specification shall not be construed as limitations on the present disclosure.

## Claims

1. An optical system, comprising:
an image projection assembly configured to emit image light;
a first optical assembly configured to reflect and transmit the image light emitted by the image projection assembly;
a second optical assembly configured to reflect the image light reflected from the first optical assembly and transmit light from a real scene; and
a stray light suppression member disposed between the image projection assembly and the first optical assembly and adjacent to a position above an effective reflection surface of the second optical assembly, the stray light suppression member being configured to block light reflected from the first optical assembly to a central region above the reflection surface of the second optical assembly, and/or to block light directly transmitted from the image projection assembly to two side regions above the reflection surface of the second optical assembly, to reduce stray light outside a field of view.

2. The optical system according to claim 1, wherein the stray light suppression member comprises a fixation portion, a first light-blocking portion, and a second light-blocking portion, wherein:
an end of the first light-blocking portion is connected to an end of the fixation portion, an end of the second light-blocking portion is connected to an intersection between the fixation portion and the first light-blocking portion, the first light-blocking portion is formed by extending in a direction facing away from the image projection assembly, the second light-blocking portion is formed by extending in a direction facing away from the second optical assembly, and the fixation portion is disposed on an upper end surface of the second optical assembly;
the first light-blocking portion is configured to block the light reflected from the first optical assembly to the central region above the reflection surface of the second optical assembly, to reduce stray light in a first region outside the field of view; and
the second light-blocking portion is configured to block the light directly transmitted from the image projection assembly to the two side regions above the reflection surface of the second optical assembly, to reduce stray light in a second region outside the field of view.

3. The optical system according to claim 1, wherein the stray light suppression member comprises a fixation portion, a first light-blocking portion, and a second light-blocking portion, wherein:
an end of the second light-blocking portion is connected to an end of the fixation portion, the second light-blocking portion is formed by extending in a direction facing away from the second optical assembly, an end of the first light-blocking portion is connected to another end of the second light-blocking portion, the first light-blocking portion is formed by extending in a direction facing away from the image projection assembly, and the fixation portion is disposed on an upper end surface of the second optical assembly;
the first light-blocking portion is configured to block the light reflected from the first optical assembly to the central region above the reflection surface of the second optical assembly, to reduce stray light in a first region outside the field of view; and
the second light-blocking portion is configured to block the light directly transmitted from the image projection assembly to the two side regions above the reflection surface of the second optical assembly, to reduce stray light in a second region outside the field of view.

4. The optical system according to claim 1, wherein the stray light suppression member comprises a fixation portion and a first light-blocking portion, an end of the first light-blocking portion is connected to an end of the fixation portion, the first light-blocking portion is formed by extending in a direction facing away from the image projection assembly, the fixation portion is disposed on an upper end surface of the second optical assembly, and the first light-blocking portion is configured to block the light reflected from the first optical assembly to the central region above the reflection surface of the second optical assembly, to reduce stray light in a first region outside the field of view.

5. The optical system according to claim 1, wherein the stray light suppression member comprises a fixation portion and a second light-blocking portion, an end of the second light-blocking portion is connected to an end of the fixation portion, the second light-blocking portion is formed by extending in a direction facing away from the second optical assembly, the fixation portion is disposed on an upper end surface of the second optical assembly, and the second light-blocking portion is configured to block the light directly transmitted from the image projection assembly to the two side regions above the reflection surface of the second optical assembly, to reduce stray light in a second region outside the field of view.

6. The optical system according to claim 1, wherein the stray light suppression member is disposed directly on an upper end surface of the second optical assembly, or the stray light suppression member is spaced apart from the upper end surface of the second optical assembly.

7. The optical system according to claim 1, wherein the image projection assembly comprises an image source and a lens, the image source is disposed at a side facing away from the first optical assembly, the lens is disposed between the image source and the first optical assembly, and light emitted from the image source passes through the lens and then enters the first optical assembly and/or the second optical assembly.

8. The optical system according to claim 1, wherein the first optical assembly comprises a polarizing beam-splitting film, a polarizer, and a substrate, the substrate being located adjacent to a human eye, the polarizer being attached to an end of the substrate facing away from the human eye, and the polarizing beam-splitting film being attached to an end of the polarizer facing away from the human eye.

9. The optical system according to claim 8, further comprising a quarter-wave plate.

10. The optical system according to claim 9, wherein the quarter-wave plate is attached to an end of the polarizing beam-splitting film facing away from the human eye.

11. The optical system according to claim 9, wherein the quarter-wave plate is disposed between the first optical assembly and the second optical assembly.

12. The optical system according to claim 9, wherein the quarter-wave plate is affixed to the second optical assembly and adjacent to a surface of the first optical assembly.

13. A wearable augmented reality display device, comprising the optical system according to claim 1 and a clamp member connected to the optical system.

14. The wearable augmented reality display device according to claim 13, wherein the stray light suppression member comprises a fixation portion, a first light-blocking portion, and a second light-blocking portion, wherein:
an end of the first light-blocking portion is connected to an end of the fixation portion, an end of the second light-blocking portion is connected to an intersection between the fixation portion and the first light-blocking portion, the first light-blocking portion is formed by extending in a direction facing away from the image projection assembly, the second light-blocking portion is formed by extending in a direction facing away from the second optical assembly, and the fixation portion is disposed on an upper end surface of the second optical assembly;
the first light-blocking portion is configured to block the light reflected from the first optical assembly to the central region above the reflection surface of the second optical assembly, to reduce stray light in a first region outside the field of view; and
the second light-blocking portion is configured to block the light directly transmitted from the image projection assembly to the two side regions above the reflection surface of the second optical assembly, to reduce stray light in a second region outside the field of view.

15. The wearable augmented reality display device according to claim 13, wherein the stray light suppression member comprises a fixation portion, a first light-blocking portion, and a second light-blocking portion, wherein:
an end of the second light-blocking portion is connected to an end of the fixation portion, the second light-blocking portion is formed by extending in a direction facing away from the second optical assembly, an end of the first light-blocking portion is connected to another end of the second light-blocking portion, the first light-blocking portion is formed by extending in a direction facing away from the image projection assembly, and the fixation portion is disposed on an upper end surface of the second optical assembly;
the first light-blocking portion is configured to block the light reflected from the first optical assembly to the central region above the reflection surface of the second optical assembly, to reduce stray light in a first region outside the field of view; and
the second light-blocking portion is configured to block the light directly transmitted from the image projection assembly to the two side regions above the reflection surface of the second optical assembly, to reduce stray light in a second region outside the field of view.

16. The wearable augmented reality display device according to claim 13, wherein the stray light suppression member comprises a fixation portion and a first light-blocking portion, an end of the first light-blocking portion is connected to an end of the fixation portion, the first light-blocking portion is formed by extending in a direction facing away from the image projection assembly, the fixation portion is disposed on an upper end surface of the second optical assembly, and the first light-blocking portion is configured to block the light reflected from the first optical assembly to the central region above the reflection surface of the second optical assembly, to reduce stray light in a first region outside the field of view.

17. The wearable augmented reality display device according to claim 13, wherein the stray light suppression member comprises a fixation portion and a second light-blocking portion, an end of the second light-blocking portion is connected to an end of the fixation portion, the second light-blocking portion is formed by extending in a direction facing away from the second optical assembly, the fixation portion is disposed on an upper end surface of the second optical assembly, and the second light-blocking portion is configured to block the light directly transmitted from the image projection assembly to the two side regions above the reflection surface of the second optical assembly, to reduce stray light in a second region outside the field of view.

18. The wearable augmented reality display device according to claim 13, wherein the stray light suppression member is disposed directly on an upper end surface of the second optical assembly, or the stray light suppression member is spaced apart from the upper end surface of the second optical assembly.

19. The wearable augmented reality display device according to claim 13, wherein the image projection assembly comprises an image source and a lens, the image source is disposed at a side facing away from the first optical assembly, the lens is disposed between the image source and the first optical assembly, and light emitted from the image source passes through the lens and then enters the first optical assembly and/or the second optical assembly.

20. The wearable augmented reality display device according to claim 13, wherein the first optical assembly comprises a polarizing beam-splitting film, a polarizer, and a substrate, the substrate being located adjacent to a human eye, the polarizer being attached to an end of the substrate facing away from the human eye, and the polarizing beam-splitting film being attached to an end of the polarizer facing away from the human eye.
